# FASCICULE DE BREVET EUROPEEN

(11) **EP 3 708 038 B1**
(45) Date de publication et mention de la délivrance du brevet: **19.01.2022**
(21) Numéro de dépôt: 20160500.3
(22) Date de dépôt: 02.03.2020
(51) Int. Cl.: A47J 31/20

(54) **MACHINE DE PREPARATION DE BOISSONS INFUSEES MUNIE D'UN PANIER FILTRE ROTATIF**
MASCHINE ZUR HERSTELLUNG VON AUFGUSSGETRÄNKEN, DIE MIT EINEM DREHBAREN FILTERKORB AUSGESTATTET IST
MACHINE FOR PREPARING INFUSIONS PROVIDED WITH A ROTARY BASKET FILTER

(30) Priorité: 11.03.2019 FR 1902472
(43) Date de publication de la demande: 16.09.2020
(73) Titulaire: SEB S.A., 69130 Ecully (FR)
(72) Inventeur: DOS SANTOS, Quentin, 69009 Lyon (FR); MORIN, Gilles, 69290 Pollionnay (FR)
(74) Mandataire: SEB Développement

(56) Documents cités:
- WO-A1-2019/046812
- CN-U- 202 698 859
- CN-U- 207 640 188
- DE-A1- 3 530 284
- US-A- 3 595 623

## Description

La présente invention se rapporte au domaine technique général des machines de préparation de boisson infusées ou macérées en partant d'eau et d'un ingrédient, notamment du thé ou du café, plus particulièrement des machines de préparation de boisson macérée en partant d'eau froide.

On connait du document US3654852 une machine de préparation de boissons infusées ou macérées comportant une carafe de réception d'eau et une base de réception. La carafe repose sur la base de réception lors de la préparation de la boisson et est retirée de la base de réception notamment pour le service de la boisson ou le nettoyage. La base de réception comporte un moteur muni d'un arbre d'entrainement mobile en rotation autour d'un axe vertical. La carafe comporte un panier filtre de réception d'un ingrédient à infuser ou à macérer qui est entrainé en rotation par l'arbre d'entrainement autour de l'axe vertical lorsque la carafe repose sur la base de réception. Le panier filtre est mobile dans la carafe entre une position d'infusion dans laquelle le panier filtre est immergé dans l'eau et accouplé avec l'arbre d'entrainement et une position extraite d'égouttage dans laquelle le panier filtre est agencé au-dessus du niveau de l'eau.

Cependant, lorsque le panier filtre est rempli de l'ingrédient à infuser ou à macérer et qu'il est placé dans la carafe remplie d'eau, il a tendance à flotter car l'ingrédient à infuser ou à macérer, par exemple du café ou du thé est plus léger que l'eau, et de l'air peut être emprisonné dans l'ingrédient. Ainsi, le maintien du panier filtre en contact avec l'arbre d'entrainement n'est pas forcément assuré et le panier filtre peut ne pas être entrainé en rotation pendant la préparation de la boisson.

De plus, la préparation de la boisson n'est pas optimisée si le panier filtre n'est pas complètement immergé dans l'eau.

On connait également des documents CN207640188 et US3595623 des machines de préparation de boissons infusées ou macérées.

Le but de la présente invention est de remédier aux inconvénients précités et de proposer une machine de préparation de boissons infusées ou macérées qui présente un fonctionnement sûr pour un résultat optimisé et une ergonomie améliorée.

Un autre but de l'invention est de proposer une machine de préparation de boissons infusées qui soit de conception simple et économique à mettre en œuvre.

Ces buts sont atteints avec une machine de préparation de boissons infusées ou macérées selon l'invention telle que definie par la revendication 1.

Ainsi, lorsque le panier filtre est en position d'infusion, le panier filtre est surtout mobile en rotation autour de l'axe Δ. Le dispositif de butée autorise un jeu réduit du panier filtre le long de l'axe Δ pour garantir l'accouplement du panier filtre avec l'arbre d'entrainement.

En conséquence, le panier filtre est accouplé à l'arbre d'entrainement de manière sûre pendant la préparation de la boisson.

De manière avantageuse l'axe Δ est majoritairement vertical, de préférence vertical.

Par majoritairement vertical, on comprend que l'axe Δ forme avec un axe vertical un angle inférieur à 45°.

Selon l'invention, la carafe comporte une ouverture supérieure et un couvercle mobile entre une position fermée dans laquelle le couvercle recouvre l'ouverture supérieure et une position ouverte dans laquelle le couvercle est écarté de l'ouverture supérieure de la carafe, le couvercle comportant une paroi inférieure qui fait partie du dispositif de butée.

Ainsi, lorsque le couvercle est en position fermée, le panier filtre est maintenu dans la carafe et lorsque le couvercle est en position ouverte, le panier filtre peut être retiré de la carafe.

De préférence, le couvercle est agencé sur la carafe de manière mobile en rotation, la carafe comportant un moyen de rappel du couvercle en position fermée.

Ainsi, la paroi inférieure qui fait partie du dispositif de butée, est maintenue pendant la préparation de la boisson.

De manière avantageuse, le moyen de rappel comporte un ressort.

Avantageusement, le panier filtre comporte une portion sphérique d'axe Δ, la portion sphérique faisant partie du dispositif de butée et coopérant avec la paroi inférieure du couvercle pour former un contact ponctuel sphère/plan lorsque le panier filtre est en position d'infusion.

Un tel contact ponctuel entre la portion sphérique et la paroi inférieur permet de limiter le frottement du panier filtre sur le couvercle.

De préférence, le panier filtre comporte un couvercle, la portion sphérique appartenant au couvercle du panier filtre.

De manière avantageuse, le couvercle est rapporté par vissage sur le panier filtre.

De préférence, le couvercle du panier filtre comporte des perforations.

Ainsi, l'air emprisonné dans l'ingrédient à infuser ou à macérer peut s'évacuer à travers les perforations.

De préférence, le panier filtre comporte un fond depuis lequel s'étend un conduit tubulaire d'axe Δ qui comprend une extrémité libre fermée, ladite extrémité libre fermée faisant partie du dispositif de butée.

Avantageusement, la carafe comporte un fond depuis lequel s'étend une excroissance d'axe Δ et de forme complémentaire au conduit tubulaire, l'excroissance comprenant une extrémité libre munie de l'arbre d'entrainement qui fait partie du dispositif de butée et qui coopère avec l'extrémité libre fermée du conduit tubulaire du panier filtre.

Ainsi, le conduit tubulaire du panier filtre est guidé en rotation autour de l'excroissance de la carafe. L'extrémité libre fermée du panier filtre et l'arbre d'entrainement forment un dispositif de butée inférieur.

Selon l'invention, la carafe repose sur la base de réception lors de la préparation de la boisson et est retirée de la base de réception notamment pour le service de la boisson ou le nettoyage. L'arbre d'entrainement comporte un arbre d'entrainement agencé dans la carafe et un arbre d'entrainement agencé dans la base de réception, l'extrémité libre de l'excroissance étant munie de l'arbre d'entrainement agencé dans la carafe qui fait partie du dispositif de butée et qui coopère avec l'extrémité libre fermée du conduit tubulaire du panier filtre.

Ainsi, la carafe est agencée de manière amovible par rapport à la base de réception. En conséquence, l'arbre d'entrainement comporte deux parties : une partie dans la base de réception et une partie dans la carafe. Avantageusement, l'arbre d'entrainement agencé dans la carafe comporte des protubérances qui coopèrent avec des logements de formes complémentaires aménagés dans l'extrémité libre fermée du conduit tubulaire pour entrainer le panier filtre en rotation.

Ainsi, on obtient un entrainement positif du panier filtre par l'arbre d'entrainement agencé dans la carafe.

De manière avantageuse, le filtre s'étend sur une hauteur H et l'excroissance de forme complémentaire au conduit tubulaire s'étend depuis le fond de la carafe sur plus de la moitié de la hauteur H du panier filtre.

Ainsi, le conduit tubulaire du panier filtre est guidé en rotation autour de l'excroissance de la carafe sur une longueur importante pour garantir un bon guidage.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig. 1] la figure 1 est une vue en perspective d'une machine de préparation de boissons infusées ou macérées selon un mode particulier de réalisation de l'invention, la carafe étant posée sur la base de réception et le panier filtre étant en position d'infusion,
[Fig. 2] la figure 2 est une vue en coupe suivant le plan de coupe II de la machine de préparation de boissons illustrée à la figure 1,
[Fig. 3] la figure 3 est une vue en perspective de la machine de préparation de bossons illustrée à la figure 1, le couvercle étant en position ouverte,
[Fig. 4] la figure 4 est une vue en coupe suivant le plan de coupe IV de la machine de préparation de boissons illustrée à la figure 3,
[Fig. 5] la figure 5 est une vue en perspective du dessous du panier filtre de la machine de préparation de boissons illustrée à la figure 1,
[Fig. 6] la figure 6 est une vue en perspective du dessous de la carafe de la machine de préparation de boissons illustrée à la figure 1,
[Fig. 7] la figure 7 est une vue en perspective du dessus de la base de réception de la machine de préparation de boissons illustrée à la figure 1,
[Fig. 8] la figure 8 est une vue en perspective du dessus de la carafe de la machine de préparation de boissons illustrée à la figure 1, la carafe comportant le sous-ensemble formé par le filtre et la pluralité de cavités,

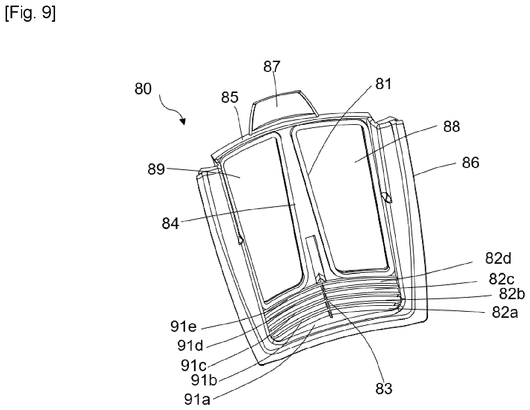

[Fig. 9] la figure 9 est une vue en perspective du dessus du sous-ensemble formé par le filtre et la pluralité de cavités de la carafe illustrée à la figure 8.

On notera que, dans ce document, les termes «horizontal», «vertical», «inférieur», «supérieur», «longitudinal», «transversal», «haut», «bas», employés pour décrire la machine de préparation de boisson, font référence à cette machine de préparation de boissons en situation d'usage, lorsqu'elle est posée sur un plan horizontal.

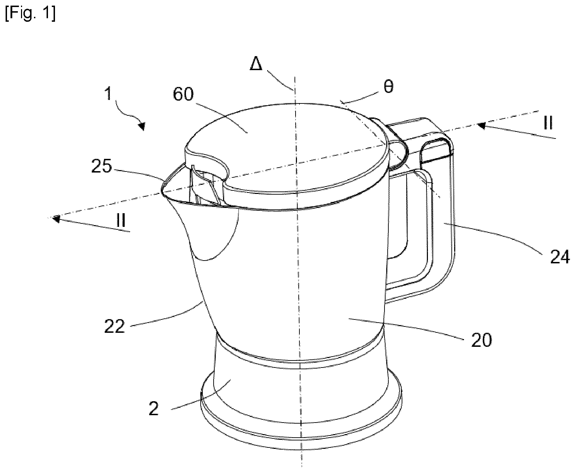

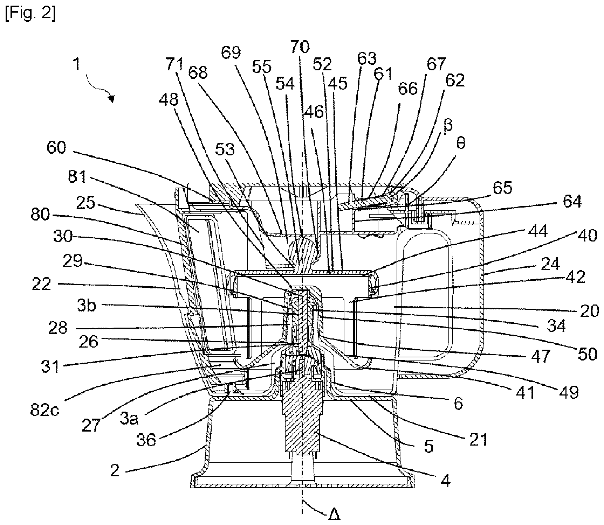

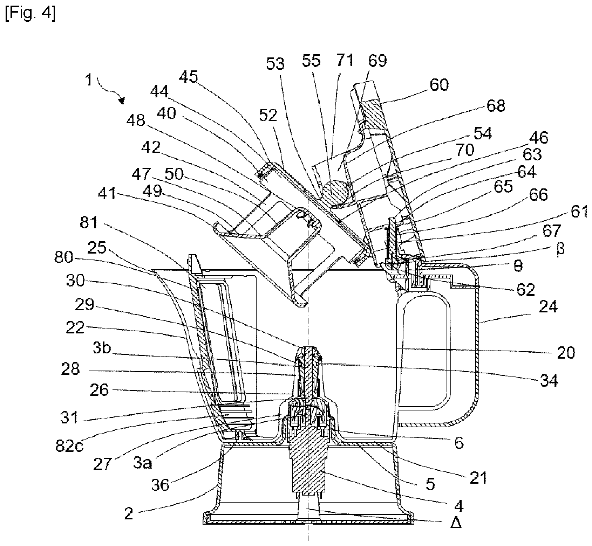

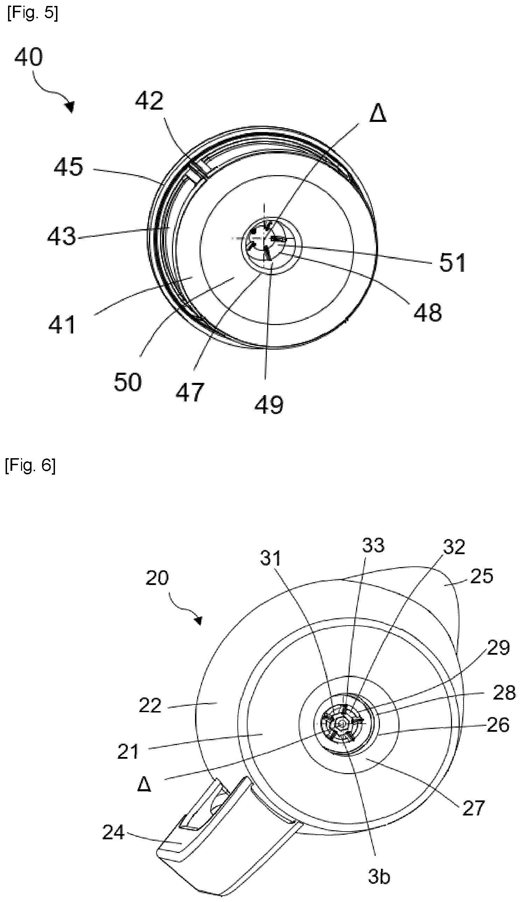

Tel que visible aux figures 1 à 7, une machine de préparation de boissons 1 comporte une base de réception 2, une carafe 20 munie d'un couvercle 60 et un panier filtre 40. Le panier filtre 40 est destiné à recevoir un ingrédient à faire infuser dans de l'eau chaude préalablement disposée dans la carafe 20 ou un ingrédient à faire macérer dans de l'eau froide, notamment du café. Le panier filtre 40 est agencé de manière rotative dans la carafe 20 et mis en rotation par un arbre d'entrainement 3a, 3b (Fig.2 et 4).

La carafe 20 repose sur la base de réception 2 lors de la préparation de la boisson et est retirée de la base de réception 2 notamment pour le service de la boisson ou le nettoyage. La base de réception 2 comporte un moteur 4 destiné à mettre en rotation l'arbre d'entrainement 3a, 3b qui est mobile autour d'un axe Δ vertical. Ainsi l'arbre d'entrainement comporte un arbre d'entrainement 3a agencé dans la base de réception 2 et un arbre d'entrainement 3b agencé dans la carafe 20.

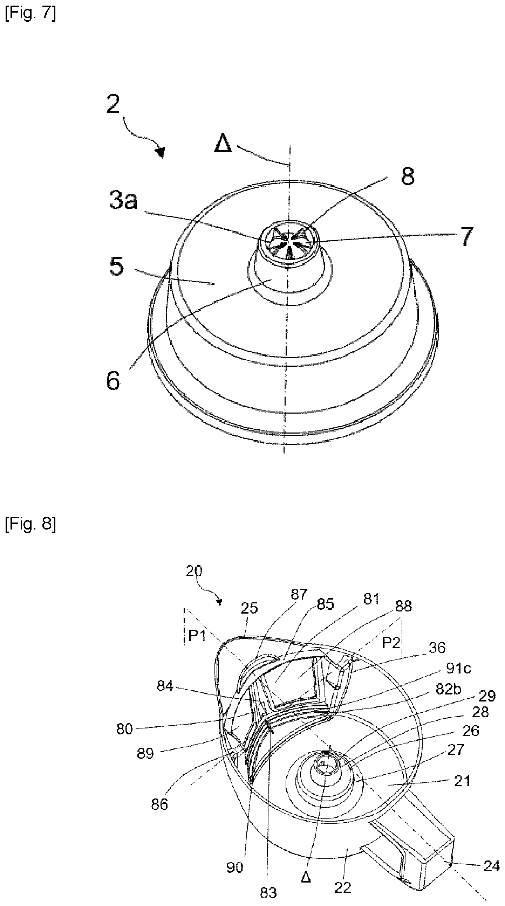

La base de réception 2 comprend une paroi supérieure 5 (fig. 7) munie d'une cheminée 6 centrale dans laquelle est logé l'arbre d'entrainement 3a qui se termine par un élément d'entrainement 7 muni de dents 8. L'arbre d'entrainement 3a agencé dans la base de réception 2 est destiné à entrainer l'arbre d'entrainement 3b agencé dans la carafe 20 ainsi que le panier filtre 40 en rotation autour de l'axe Δ. Le panier filtre 40 est également mobile dans la carafe 20 entre une position d'infusion dans laquelle le panier filtre 40 est immergé dans l'eau et accouplé avec l'arbre d'entrainement 3a, 3b et une position extraite d'égouttage dans laquelle le panier filtre 40 est agencé au-dessus du niveau de l'eau.

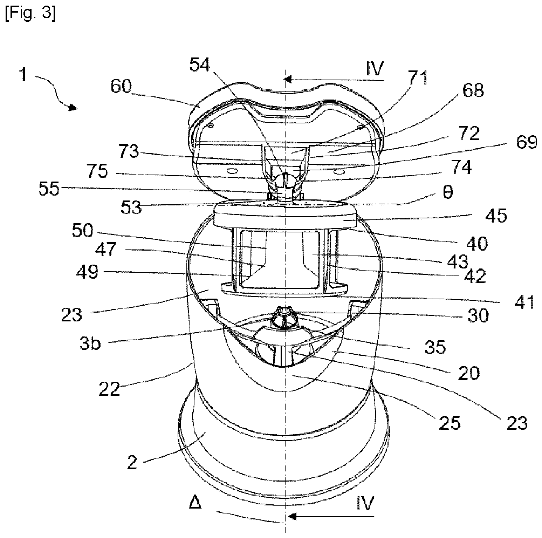

La carafe 20 comporte un fond 21 et une paroi latérale 22 sensiblement cylindrique dont l'extrémité libre délimite une ouverture supérieure 23 (Fig.3 et 4). La carafe 20 comporte une poignée 24 et un bec verseur 25 agencé de manière diamétralement opposée à la poignée 24. La carafe 20 est configurée pour recevoir le panier filtre 40 qui est agencé dans celle-ci de manière rotative lors de la préparation de la boisson.

La carafe 20 comporte une excroissance 26 d'axe Δ qui s'étend depuis le fond 21. L'excroissance 26 comporte une portion inférieure 27 de diamètre D1 suivie d'une portion supérieure 28 de diamètre D2, D1 étant supérieur à D2. La portion inférieure 27 forme un logement destiné à coopérer avec la cheminée 6 de la base de réception 2. L'arbre d'entrainement 3b agencé dans la carafe 20 est disposé dans la portion supérieure 28. La portion supérieure 28 comporte une extrémité libre 29 ouverte qui est coiffée par une extrémité supérieure 30 de l'arbre d'entrainement 3b agencé dans la carafe 20. L'arbre d'entrainement 3b agencé dans la carafe 20 comporte une extrémité inférieure 31 formant une cavité 32 destinée à coopérer avec l'élément d'entrainement 7 de l'arbre d'entrainement 3a agencé dans la base de réception 2 lorsque la carafe 20 repose sur la base de réception 2. La cavité 32 comporte des dents 33 qui coopèrent avec les dents 8 de l'élément d'entrainement 7 pour transmettre la rotation du moteur 4 à l'arbre d'entrainement 3b agencé dans la carafe 20. Un joint d'étanchéité 34 est agencé entre l'arbre d'entrainement 3b agencé dans la carafe 20 et la portion supérieure 28.

Le panier filtre 40 comporte un fond 41 et une paroi latérale 42 munie d'ouvertures 43. Un tamis à mailles fines (non représenté sur les figures) recouvre les ouvertures 43. La paroi latérale 42 est sensiblement cylindrique et son extrémité libre délimite une ouverture supérieure 44. Le panier filtre 40 comporte un couvercle 45 qui est destiné à être rapporté sur l'extrémité libre de la paroi latérale 42 par vissage pour fermer l'ouverture supérieure 44. Le couvercle 45 comporte des perforations 46 pour permettre l'échappement de l'air emprisonné sous le couvercle 45.

Le panier filtre 40 comporte un conduit tubulaire 47 d'axe Δ qui s'étend depuis le fond 41 et qui qui comprend une extrémité libre fermée 48. Le conduit tubulaire 47 comporte une portion conique 49 et une portion sensiblement cylindrique 50. L'extrémité libre fermée 48 est destinée à coopérer avec l'extrémité supérieure 30 de l'arbre d'entrainement 3b agencé dans la carafe 20. La portion sensiblement cylindrique 50 coopère avec la portion supérieure 28 de l'excroissance 26 de la carafe 20 pour guider en rotation le panier filtre 40 autour de l'axe Δ. L'extrémité supérieure 30 de l'arbre d'entrainement 3b agencé dans la carafe 20 comporte des protubérances 35 qui coopèrent avec des logements 51 de formes complémentaires (Fig.4) aménagés dans l'extrémité libre fermée 48 du conduit tubulaire 47 pour entrainer en rotation le panier filtre 40. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Le couvercle 45 du panier filtre 40 comporte une paroi supérieure 52 et une tige cylindrique 53. La tige cylindrique 53 s'étend le long de l'axe Δ, depuis la paroi supérieure 52 et se termine par une portion sphérique 54.

Le couvercle 60 de la carafe 20 est mobile en rotation autour d'un axe θ, perpendiculaire à l'axe Δ, entre une position fermée (Fig.1 et 2) dans laquelle le couvercle 60 recouvre l'ouverture supérieure 23 et une position ouverte (Fig.3 et 4) dans laquelle le couvercle 60 est écarté de l'ouverture supérieure 23 de la carafe 20. Le couvercle 60 comporte une position intermédiaire instable entre la position fermée et la position ouverte qui sont des positions stables. La carafe 20 comporte un moyen de rappel du couvercle 60 en position fermée ou en position ouverte (Fig.2 et 4). Le moyen de rappel comporte une tige cylindrique 61 dont une extrémité 62 est articulée en rotation autour d'un axe β parallèle à l'axe θ et décalé de l'axe θ vers le centre et le haut de la carafe 20. La tige cylindrique 61 comporte une extrémité libre 63 qui est agencée de manière coulissante dans une ouverture traversante 65 aménagée dans une paroi 64 du couvercle 60. Le moyen de rappel comporte également un ressort 66 de compression qui est agencé autour de la tige cylindrique 61. Le ressort 66 prend appui à une première extrémité sur une butée 67 agencée sur la tige cylindrique 61 et proche de l'axe β. Le ressort 66 prend appui à une deuxième extrémité sur la paroi 64. L'axe β étant décalé de l'axe θ vers le centre et le haut de la carafe 20, le ressort 66 tend à rappeler le couvercle 60 dans la position stable la plus proche à partir de la position intermédiaire instable.

Le couvercle 60 comporte une paroi inférieure 68 qui est destinée à coopérer avec la portion sphérique 54 lorsque le couvercle est en position fermée (Fig.2). La portion sphérique 54 et la paroi inférieure 68 du couvercle 60 forment un contact ponctuel sphère/plan lorsque le panier filtre 40 est en position d'infusion et le couvercle 60 en position fermée. La portion sphérique 54 et la paroi inférieure 68 forment ainsi un dispositif de butée supérieur qui empêche le panier filtre 40 de se déplacer vers le haut, le long de l'axe Δ.

Le panier filtre 40 est mobile le long de l'axe Δ avec un jeu réduit de quelques millimètres, notamment inférieur à un millimètre entre une position basse et une position haute. Quelle que soit sa position le long de l'axe Δ, le panier filtre 40 est entrainé en rotation par l'arbre d'entrainement 3a, 3b. Dans sa position d'infusion, le panier filtre 40 est maintenu entre la position basse dans laquelle l'extrémité libre fermée 48 du panier filtre 40 est en butée sur l'extrémité supérieure 30 de l'arbre d'entrainement 3b agencé dans la carafe 20 et la position haute dans laquelle la portion sphérique 54 est en butée sur la paroi inférieure 68.

Le panier filtre 40 s'étend le long de l'axe Δ sur une hauteur H. L'excroissance 26 de forme complémentaire au conduit tubulaire 47 s'étend depuis le fond 21 de la carafe 20 sur plus de la moitié de la hauteur H du panier filtre 40.

La tige cylindrique 53 et la portion sphérique 54 du panier filtre 40 forment un organe coulissant 55 du type tasseau en T et le couvercle 60 comporte une rainure 69 du type rainure en T agencée sur la paroi inférieure 68. L'organe coulissant 55 du type tasseau en T et la rainure 69 du type rainure en T forment un dispositif d'accouplement du panier filtre 40 sur le couvercle 60 qui permet de faire passer le panier filtre 40 de la position d'infusion lorsque le couvercle 60 est en position fermée à la position d'égouttage lorsque le couvercle 60 est en position ouverte.

La rainure 69 comporte un plan de symétrie vertical passant par l'axe Δ et perpendiculaire à l'axe θ. La rainure 69 comporte une extrémité fermée 70 contre laquelle l'organe coulissant 55 est en appui lorsque le panier filtre 40 est en position d'égouttage et une extrémité ouverte 71 par laquelle l'organe coulissant 55 peut passer. Ainsi, le panier filtre 40 est mobile par rapport au couvercle 60 entre la position d'égouttage dans laquelle l'organe coulissant 55 est en appui sur l'extrémité fermée 70 et une position extraite dans laquelle l'organe coulissant 55 est sorti de la rainure 69 par l'extrémité ouverte 71. La rainure 69 comporte des parois 72, 73 munies chacune d'une portion arrondie 74, 75 d'extrémité qui coopèrent avec la portion sphérique 54 lors de la manipulation du couvercle 60, pour agir sur le panier filtre 40, notamment pour l'amener dans la position d'égouttage.

Conformément aux figures 7 et 8, la carafe 20 comporte un sous-ensemble 80 formé par un filtre 81 et une pluralité de cavités 82a, 82b, 82c, 82d. La pluralité de cavités 82a, 82b, 82c, 82d est agencée dans une portion incurvée inférieure 83 du sous-ensemble 80. La portion incurvée inférieure 83 s'étend depuis le fond 21 vers le haut et de manière sensiblement parallèle à la paroi latérale 22. Le filtre 81 est agencé dans une portion incurvée supérieure 84 du sous-ensemble 80. La portion incurvée supérieure 84 s'étend depuis la portion incurvée inférieure 83 vers le haut, devant le bec verseur 25 jusqu'à une extrémité libre 85 alignée avec l'ouverture supérieure 23 de la carafe 20. Le sous-ensemble 80 est agencé de manière amovible dans la carafe 20. La carafe 20 comporte une nervure 36 et le sous-ensemble 80 comporte un cadre périphérique 86. Le cadre périphérique 86 est destiné à coopérer avec la nervure 36 pour maintenir le sous-ensemble 80 dans la carafe 20. L'extrémité libre 85 comporte une excroissance de matière 87 qui forme une zone de préhension du sous-ensemble 80.

Le bec verseur 25 et le sous-ensemble 80 comportent un même plan de symétrie P1 qui passe par la poignée 24. Le filtre 81 comporte deux tamis 88, 89 présentant chacun une maille définissant des orifices de passage compris entre 30 et 50 micromètres (non représentés sur les figures). Les deux tamis 88, 89 sont agencés de part et d'autre du plan de symétrie P1. Le cadre périphérique 86 et la nervure 36 s'étendent dans un plan P2 sensiblement perpendiculaire au plan de symétrie P1. Le sous-ensemble 80 présente une forme projetée sur le plan P2 trapézoïdale.

La portion incurvée inférieure 83 comporte une paroi de fond 90 parallèle à la paroi latérale 22 de la carafe 20, depuis laquelle s'étendent parallèlement au fond 21 une succession de parois incurvées 91a, 91b, 91c, 91d, 91e qui définissent la pluralité de cavités 82a, 82b, 82c, 82d. Ainsi, chaque cavité 82a, 82b, 82c, 82d présente une ouverture en arc de cercle, orientée vers l'intérieur de la carafe 20. Dans une section transversale parallèle au fond 21, la paroi latérale 22 de la carafe 20 comporte une périphérie P et la portion incurvée inférieure 83 s'étend sur au moins 10% de la périphérie P.

En fonctionnement, l'utilisateur positionne la carafe 20 sur la base de réception 2, déplace le couvercle 60 dans la position ouverte pour amener le panier filtre 40 dans la position d'égouttage. Il saisit le panier filtre 40 et le déplace vers le haut. L'organe coulissant 55 formé par la tige cylindrique 53 et la portion sphérique 54 est déplacé pour sortir de la rainure 69 et ainsi le panier filtre 40 est désolidarisé du couvercle 60, en position extraite. L'utilisateur met alors de l'eau dans la carafe 20 et rempli le panier filtre 40 avec un ingrédient à faire infuser ou à faire macérer, par exemple du café. Il positionne ensuite le panier filtre 40 sur le couvercle 60 en glissant l'organe coulissant 55 dans la rainure 69 pour l'amener dans la position d'égouttage. Il bascule ensuite le couvercle 60 dans la position fermée pour amener le panier filtre 40 dans la position d'infusion dans la carafe. L'utilisateur lance alors un cycle de préparation de boisson. Le moteur 4 est activé et l'arbre d'entrainement 3a agencé dans la base de réception 2 entraine en rotation l'arbre d'entrainement 3b agencé dans la carafe 20 ainsi que le panier filtre 40. L'ingrédient à faire infuser ou à faire macérer n'étant pas encore imprégné par l'eau, le panier filtre 40 flotte dans l'eau et la portion sphérique 54 vient en appui sur la paroi inférieure 68 pour former un dispositif de butée supérieur qui empêche le panier filtre 40 de se déplacer vers le haut, le long de l'axe Δ. Lorsque l'ingrédient à faire infuser ou à faire macérer est suffisamment imprégné par l'eau, le panier filtre 40 se déplace le long de l'axe Δ vers le fond 21 de la carafe 20. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Une fois la boisson préparée, l'utilisateur déplace le couvercle 60 dans la position ouverte pour amener le panier filtre 40 dans la position d'égouttage. Après quelques minutes, l'eau contenue dans le panier filtre 40 s'est égouttée et l'utilisateur peut retirer le panier filtre 40 puis refermer le couvercle 60. L'utilisateur peut alors saisir la poignée 24 de la carafe 20 pour servir la boisson. La boisson passe à travers les tamis 88, 89 du filtre 81 vers le bec verseur 25 pour retenir des particules fines d'ingrédient et, en fin de versage, des particules lourdes qui se sont déposées sur le fond 21 sont entrainées vers la pluralité de cavités 82a, 82b, 82c, 82d, puis sous l'effet de la gravité tombent dans ces cavités 82a, 82b, 82c, 82d. Les particules lourdes qui ne sont pas piégées dans les cavités 82a, 82b, 82c, 82d sont retenues par les tamis 88, 89 du filtre 81.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention telle que définie par la portée des revendications.

Dans une variante de réalisation, le panier filtre est entrainé en rotation par un entrainement magnétique.

## Revendications

1. Machine de préparation de boissons (1) infusées ou macérées comportant une carafe (20) destinée à recevoir un liquide et une base de réception (2), ladite base de réception (2) comportant un moteur (4) destiné à mettre en rotation autour d'un axe Δ un arbre d'entrainement (3a, 3b), ladite carafe (20) comportant un panier filtre (40) de réception d'un ingrédient à faire infuser ou à faire macérer qui est entrainé en rotation par l'arbre d'entrainement (3a, 3b) autour de l'axe Δ, ledit panier filtre (40) étant mobile dans la carafe (20) entre une position d'infusion dans laquelle le panier filtre (40) est immergé dans le liquide et accouplé avec l'arbre d'entrainement (3a, 3b) et une position extraite d'égouttage dans laquelle le panier filtre (40) est agencé au-dessus du niveau du liquide, la carafe (20) reposant sur la base de réception (2) lors de la préparation de la boisson et étant retirée de la base de réception (2) notamment pour le service de la boisson ou le nettoyage, la carafe (20) comportant une ouverture supérieure (23) et un couvercle (60) mobile entre une position fermée dans laquelle le couvercle (60) recouvre l'ouverture supérieure (23) et une position ouverte dans laquelle le couvercle (60) est écarté de l'ouverture supérieure (23) de la carafe (20)
**caractérisée en ce que** le panier filtre (40) est mobile le long de l'axe Δ avec un jeu réduit à quelques millimètres lorsque le panier filtre (40) est en position d'infusion, ladite machine de préparation de boissons (1) comportant un dispositif de butée (3a, 3b, 48, 54, 68) pour limiter la mobilité du panier filtre (40) le long de l'axe Δ et **en ce que** le couvercle (60) comporte une paroi inférieure (68) qui fait partie du dispositif de butée.

2. Machine de préparation de boissons (1) selon la revendication 1, **caractérisée en ce que** le couvercle (60) est agencé sur la carafe (20) de manière mobile en rotation, la carafe (20) comportant un moyen de rappel (61, 66) du couvercle (60) en position fermée.

3. Machine de préparation de boissons (1) selon l'une quelconque des revendications 1 ou 2, **caractérisée en ce que** le panier filtre (40) comporte une portion sphérique (54) d'axe Δ, la portion sphérique (54) faisant partie du dispositif de butée et coopérant avec la paroi inférieure (68) du couvercle (60) pour former un contact ponctuel sphère/plan lorsque le panier filtre (40) est en position d'infusion.

4. Machine de préparation de boissons (1) selon la revendication 3, **caractérisée en ce que** le panier filtre (40) comporte un couvercle (45), la portion sphérique (54) appartenant au couvercle (45) du panier filtre (40).

5. Machine de préparation de boissons infusée (1) selon la revendication 4, **caractérisée en ce que** le couvercle (45) du panier filtre (40) comporte des perforations (46).

6. Machine de préparation de boissons (1) selon l'une quelconque des revendications 1 à 5, **caractérisée en ce que** le panier filtre (40) comporte un fond (41) depuis lequel s'étend un conduit tubulaire (47) d'axe Δ qui comprend une extrémité libre fermée (48), ladite extrémité libre fermée (48) faisant partie du dispositif de butée.

7. Machine de préparation de boissons (1) selon la revendication 6, **caractérisée en ce que** la carafe (20) comporte un fond (21) depuis lequel s'étend une excroissance (26) d'axe Δ et de forme complémentaire au conduit tubulaire (47), l'excroissance (26) comprenant une extrémité libre (29) munie de l'arbre d'entrainement (3a, 3b) qui fait partie du dispositif de butée et qui coopère avec l'extrémité libre fermée (48) du conduit tubulaire (47) du panier filtre (40).

8. Machine de préparation de boissons (1) selon la revendication 7, **caractérisée en ce que** la carafe (20) repose sur la base de réception (2) lors de la préparation de la boisson et est retirée de la base de réception (2) notamment pour le service de la boisson ou le nettoyage et **en ce que** l'arbre d'entrainement comporte un arbre d'entrainement (3b) agencé dans la carafe (20) et un arbre d'entrainement (3a) agencé dans la base de réception (2), l'extrémité libre (29) de l'excroissance (26) étant munie de l'arbre d'entrainement (3b) agencé dans la carafe (20) qui fait partie du dispositif de butée et qui coopère avec l'extrémité libre fermée (48) du conduit tubulaire (47) du panier filtre (40).

9. Machine de préparation de boissons (1) selon la revendication 8, **caractérisée en ce que** l'arbre d'entrainement (3b) agencé dans la carafe (20) comporte des protubérances (35) qui coopèrent avec des logements (51) de formes complémentaires aménagés dans l'extrémité libre fermée (48) du conduit tubulaire (47) pour entrainer en rotation le panier filtre (40).

10. Machine de préparation de boissons (1) selon l'une quelconque des revendications 7 à 9, **caractérisée en ce que** le panier filtre (40) s'étend sur une hauteur H et **en ce que** l'excroissance (26) de forme complémentaire au conduit tubulaire (47) s'étend depuis le fond (21) de la carafe (20) sur plus de la moitié de la hauteur H du panier filtre (40).

## Patentansprüche

1. Maschine zur Herstellung von Aufguss- oder Einweichgetränken (1), die eine Karaffe (20) beinhaltet, die dazu bestimmt ist, eine Flüssigkeitkeit aufzunehmen und eine Aufnahmebasis (2), wobei die Aufnahmebasis (2) einen Motor (4) beinhaltet, der dazu bestimmt ist, eine Antriebswelle (3a, 3b) um eine Achse Δ in Dehung zu versetzen, wobei die Karaffe (20) einen Filterkorb (40) zur Aufnahme einer Zutat beinhaltet, die aufzugießen oder einzuweichen ist, der durch die Antriebswelle (3a, 3b) um die Achse Δ in Drehung angetrieben wird, wobei der Filterkorb (40) in der Karaffe (20) zwischen einer Aufgussposition, in der der Filterkorb (40) in die Flüssigkeit eingetaucht ist, und mit der Antriebswelle (3a, 3b) gekoppelt ist, und einer herausgezogenen Abtropfposition beweglich ist, in der der Filterkorb (40) oberhalb des Flüssigkeitsniveaus angeordnet ist, wobei die Karaffe (20) bei der Zubereitung des Getränks auf der Aufnahmebasis (2) aufliegt, und von der Aufnahmebasis (2) insbesondere zum Servieren des Getränks oder zum Reinigen entfernt wird, wobei die Karaffe (20) eine obere Öffnung (23) und einen Deckel (60) beinhaltet, der zwischen einer geschlossenen Position, in der der Deckel (60) die obere Öffnung (23) abdeckt, und einer offenen Position, in der der Deckel (60) von der oberen Öffnung (23) der Karaffe (20) entfernt ist, beweglich ist, **dadurch gekennzeichnet, dass** der Filterkorb (40) entlang der Achse Δ mit einem auf einige Millimeter reduzierten Spiel beweglich ist, wenn der Filterkorb (40) in Aufgussposition ist, wobei die Maschine zur Herstellung von Getränken (1) eine Anschlagvorrichtung (3a, 3b, 48, 54, 68) zum Begrenzen der Beweglichkeit des Filterkorbes (40) entlang der Achse Δ beinhaltet, und dadurch, dass der Deckel (60) eine untere Wand (68) beinhaltet, welche Teil der Anschlagvorrichtung ist.

2. Maschine zur Herstellung von Getränken (1) nach Anspruch 1, **dadurch gekennzeichnet, dass** der Deckel (60) drehbeweglich auf der Karaffe (20) angeordnet ist, wobei die Karaffe (20) ein Rückstellmittel (61, 66) des Deckels (60) in geschlossene Position beinhaltet.

3. Maschine zur Herstellung von Getränken (1) nach einem der Ansprüche 1 oder 2, **dadurch gekennzeichnet, dass** der Filterkorb (40) einen kugelförmigen Abschnitt (54) mit einer Achse Δ beinhaltet, wobei der kugelförmige Abschnitt (54) Teil der Anschlagvorrichtung ist und mit der unteren Wand (68) des Deckels (60) zusammenwirkt, um einen punktuellen Kontakt Kugel/Ebene zu bilden, wenn der Filterkorb (40) in Aufgussposition ist.

4. Maschine zur Herstellung von Getränken (1) nach Anspruch 3, **dadurch gekennzeichnet, dass** der Filterkorb (40) einen Deckel (45) beinhaltet, wobei der kugelförmige Abschnitt (54) dem Deckel (45) des Filterkorbs (40) angehört.

5. Maschine zur Herstellung von Aufgussgetränken (1) nach Anspruch 4, **dadurch gekennzeichnet, dass** der Deckel (45) des Filterkorbes (40) Lochungen (46) beinhaltet.

6. Maschine zur Herstellung von Getränken (1) nach einem der Ansprüche 1 bis 5, **dadurch gekennzeichnet, dass** der Filterkorb (40) einen Boden (41) beinhaltet, aus dem sich eine rohrförmige Leitung (47) mit einer Achse Δ erstreckt, die ein freies geschlossenes Ende (48) umfasst, wobei das freie geschlossene Ende (48) Teil der Anschlagvorrichtung ist.

7. Maschine zur Herstellung von Getränken (1) nach Anspruch 6, **dadurch gekennzeichnet, dass** die Karaffe (20) einen Boden (21) beinhaltet, aus dem sich eine Ausstülpung (26) mit einer Achse Δ und in ergänzender Form zur rohrförmigen Leitung (47) erstreckt, wobei die Ausstülpung (26) ein freies Ende (29) umfasst, das mit einer Antriebswelle (3a, 3b) versehen ist, die Teil der Anschlagvorrichtung ist und die mit dem freien geschlossenen Ende (48) der rohrförmigen Leitung (47) des Filterkorbes (40) zusammenwirkt.

8. Maschine zur Herstellung von Getränken (1) nach Anspruch 7, **dadurch gekennzeichnet, dass** die Karaffe (20) bei der Herstellung des Getränkes auf der Aufnahmebasis (2) aufliegt und insbesondere beim Servieren des Getränks oder Reinigen von der Aufnahmebasis (2) abgenommen wird, und dadurch, dass die Antriebswelle eine Antriebswelle (3b) beinhaltet, die in der Karaffe (20) angeordnet ist, und eine Antriebswelle (3a), die in der Aufnahmebasis (2) angeordnet ist, wobei das freie Ende (29) der Ausstülpung (26) mit der Antriebswelle (3b) versehen ist, die in der Karaffe (20) angeordnet ist, die Teil der Anschlagvorrichtung ist, und die mit dem freien geschlossenen Ende (48) der rohrförmigen Leitung (47) des Filterkorbes (40) zusammenwirkt.

9. Maschine zur Herstellung von Getränken (1) nach Anspruch 8, **dadurch gekennzeichnet, dass** die Antriebswelle (3b), die in der Karaffe (20) angeordnet ist, Vorsprünge (35) beinhaltet, die mit Aufnahmen (51) in ergänzenden Formen zusammenwirken, die in dem freien geschlossenen Ende (48) der rohrförmigen Leitung (47) angeordnet sind, um den Filterkorb (40) in Drehung anzutreiben.

10. Maschine zur Herstellung von Getränken (1) nach einem der Ansprüche 7 bis 9, **dadurch gekennzeichnet, dass** sich der Filterkorb (40) über eine Höhe H erstreckt, und dadurch, dass sich die Ausstülpung (26) in ergänzender Form zur rohrförmigen Leitung (47) aus dem Boden (21) der Karaffe (20) über mehr als die Hälfte der Höhe H des Filterkorbes (40) erstreckt.

## Claims

1. Machine for preparing infusions (1) or macerated beverages comprising a jug (20) intended to receive a liquid and a receiving base (2), said receiving base (2) comprising a motor (4) intended to rotate a drive shaft (3a, 3b) about an axis Δ, said jug (20) comprising a basket filter (40) for receiving an ingredient to infuse or macerate, which is rotated by the drive shaft (3a, 3b) about the axis Δ, said basket filter (40) being movable in the jug (20) between an infusion position wherein the basket filter (40) is immersed in the liquid and coupled with the drive shaft (3a, 3b) and an extracted draining position wherein the basket filter (40) is arranged above the level of the liquid, the jug (20) resting on the receiving base (2) during the preparation of the beverage and being removed from the receiving base (2), in particular for serving the beverage or cleaning, the jug (20) comprising an upper opening (23) and a cover (60), movable between a closed position wherein the cover (60) covers the upper opening (23) and an open position wherein the cover (60) is offset from the upper opening (23) of the jug (20), **characterised in that** the basket filter (40) is movable along the axis Δ with a clearance reduced to a few millimetres when the basket filter (40) is in the infusion position, said machine for preparing beverages (1) comprising an abutment device (3a, 3b, 48, 54, 68) to limit the mobility of the basket filter (40) along the axis Δ and **in that** the cover (60) comprises a lower wall (68) which forms part of the abutment device.

2. Machine for preparing beverages (1) according to claim 1, **characterised in that** the cover (60) is arranged on the jug (20) movably in rotation, the jug (20) comprising a means for returning (61, 66) the cover (60) into the closed position.

3. Machine for preparing beverages (1) according to any one of claims 1 or 2, **characterised in that** the basket filter (40) comprises a spherical portion (54) of axis Δ, the spherical portion (54) forming part of the abutment device and engaging with the lower wall (68) of the cover (60) to form a sphere/plane contact point when the basket filter (40) is in the infusion position.

4. Machine for preparing beverages (1) according to claim 3, **characterised in that** the basket filter (40) comprises a cover (45), the spherical portion (54) belonging to the cover (45) of the basket filter (40).

5. Machine for preparing infusions (1) according to claim 4, **characterised in that** the cover (45) of the basket filter (40) comprises perforations (46).

6. Machine for preparing beverages (1) according to any one of claims 1 to 5, **characterised in that** the basket filter (40) comprises a bottom (41) from which extends a tubular conduit (47) of axis Δ which comprises a closed free end (48), said closed free end (48) forming part of the abutment device.

7. Machine for preparing beverages (1) according to claim 6, **characterised in that** the jug (20) comprises a bottom (21) from which extends an excrescence (26) of axis Δ and of shape complementary to the tubular conduit (47), the excrescence (26) comprising a free end (29) equipped with the drive shaft (3a, 3b) which forms part of the abutment device and which engages with the closed free end (48) of the tubular conduit (47) of the basket filter (40).

8. Machine for preparing beverages (1) according to claim 7, **characterised in that** the jug (20) rests on the receiving base (2) during the preparation of the beverage and is removed from the receiving base (2), in particular for serving the beverage or cleaning, and **in that** the drive shaft comprises a drive shaft (3b) arranged in the jug (20) and a drive shaft (3a) arranged in the receiving base (2), the free end (29) of the excrescence (26) being equipped with the drive shaft (3b) arranged in the jug (20) which forms part of the abutment device and which engages with the closed free end (48) of the tubular conduit (47) of the basket filter (40).

9. Machine for preparing beverages (1) according to claim 8, **characterised in that** the drive shaft (3b) arranged in the jug (20) comprises projections (35) which engage with housings (51) of complementary shapes arranged in the closed free end (48) of the tubular conduit (47) to rotate the basket filter (40).

10. Machine for preparing beverages (1) according to any one of claims 7 to 9, **characterised in that** the basket filter (40) extends over a height H and **in that** the excrescence (26) of shape complementary to the tubular conduit (47) extends from the bottom (21) of the jug (20) over more than half the height H of the basket filter (40).
